# EUROPEAN PATENT APPLICATION

(11) **EP 0 626 232 A1**
(43) Date of publication of application: **30.11.1994**
(21) Application number: 94303747.3
(22) Date of filing: 25.05.1994
(51) Int. Cl.: B23P 6/00, F22B 37/00, B21D 39/20, F16L 55/162, F28F 11/02, B23P 19/02

(54) **Device and method for sleeving an inside surface of a tube**

(30) Priority: 26.05.1993 US 67263
(71) Applicant: WESTINGHOUSE ELECTRIC CORPORATION, Pittsburgh Pennsylvania 15222 (US)
(72) Inventor: Kozak, Larry Michael, Greensburg, PA 15601 (US)
(74) Representative: van Berlyn, Ronald Gilbert

(57) **Abstract**

Device and method for sleeving an inside surface (40) of a tube (30), which tube may be a heat transfer tube of the kind typically found in nuclear steam generators. The device comprises a sleeve (230) having a wall (310) forming a compact spiral-shaped transverse cross section defining a first position of the sleeve. The wall in its first position surrounds an expandable bladder (240) supported by a support body (360). The support body, bladder and sleeve are inserted into the tube and translated along the inside surface thereof to the region of the tube to be sleeved. The compact spiral-shape of the wall in its first position allows it to pass unimpeded through the inside diameter of a previously installed sleeve that may be disposed in the tube, so that the previously installed sleeve does not interfere with the translation of the sleeve along the inside surface of the tube. Connected to the bladder is a pressurizer (250) for pressurizing the bladder so that the bladder expands to expand the wall of the sleeve (after it passes through the inside diameter of the previously installed sleeve) from the first position to a second position wherein the wall forms an annular transverse cross section. A fluid reservoir (260) is in fluid communication with the pressurizer for supplying fluid to the pressurizer which in turn pressurizes the fluid and supplies the pressurized fluid to the bladder to pressurize and expand the bladder. As the bladder expands, the wall moves from its first position to its second position and intimately engages the inside surface of the tube for sleeving the tube.

## Description

### BACKGROUND

This invention generally relates to tube sleeves and methods of installing same and more particularly relates to a device and method for sleeving an inside surface of a tubular member, which tubular member may be a heat transfer tube of the kind typically found in nuclear steam generators.

A nuclear steam generator is a device for producing steam by circulation of a pressurized and radioactive first fluid, referred to as the primary fluid, through a plurality of leak-tight tubes that are surrounded by a nonradioactive second fluid of lower temperature, referred to as the secondary fluid. Each tube passes through holes in a plurality of spaced-apart support plates for laterally supporting the tubes. The tubes have an inverted U-shape, the opposite ends of which pass through openings in a tubesheet disposed in the steam generator, the tube ends being welded to the tubesheet for axially supporting the tubes. The tube ends are in fluid communication with a plenum defined by the steam generator, the plenum being divided by means of a divider plate into an inlet chamber and an outlet chamber. The inlet and outlet chambers are in communication with the primary fluid by means of an inlet nozzle and an outlet nozzle, respectively, for circulating the primary fluid through the tubes. The secondary fluid, which surrounds the tubes, is vaporized into steam as the heat of the circulating primary fluid is conducted through the walls of the tubes to the secondary fluid. The steam flows to a turbine-generator for providing revenue-producing electricity in a manner well known in the art of power generation.

The secondary and/or primary fluid, however, may contain suspended corrosive particles such as metal oxides and scale-forming calcium. These corrosive deposits may occasionally degrade the tubes. Such degradation, which may preferentially occur at the tubesheet and support plate regions, may increase the risk that the tubes will experience a phenomenon known in the art as stress corrosion cracking. This stress corrosion cracking in turn may lead to through-wall cracks in the tubes that may compromise the ability of the tubes to remain leak-tight. Inability of the tubes to remain leak-tight may allow the pressurized and radioactive primary fluid to leak through the cracks and commingle with the nonradioactive secondary fluid. Leaking tubes are undesirable because commingling the radioactive primary fluid with the nonradioactive secondary fluid radioactively contaminates the secondary fluid which in turn may lead to radioactive contamination of the turbine-generator and its surrounding environment.

However, if degradation is suspected, the tube, although degraded, may remain in service by sleeving the degraded portion of the tube. When sleeving is performed, a tubular sleeve is inserted into the tube to span, bridge or cover the degraded portion of the tube. The sleeve may then be secured to the tube by radially expanding portions of the sleeve into intimate engagement with the inner wall of the tube, such that the sleeve is affixed to the tube and such that the degraded portion of the tube is covered. In this manner, the radioactive primary fluid is prevented from commingling with the non-radioactive secondary fluid even though the wall of the tube is degraded.

The previously mentioned phenomenon of stress corrosion cracking, which may affect the tubes at the location of the tubesheet, may likewise affect the tubes at the location of the support plates. However, in the case where a tube has been previously sleeved at the location of the tubesheet, such a sleeve will create an interference or obstruction that impedes the passage of a similarly-sized second sleeve intended for use in the same tube but at the location of the support plate (i.e., at an elevation beyond any preexisting sleeve which is located at the tubesheet). Therefore, if such a tube experiences stress corrosion cracking at an elevation beyond the location of the preexisting sleeve located at the tubesheet, the common practice in the art is to simply plug the tube to remove it from service due to the difficulties associated with installing a similarly-sized second sleeve at an elevation beyond the preexisting sleeve (i.e., at the elevation of the support plate).

However, plugging steam generator tubes reduces the thermal efficiency of the steam generator and therefore reduces the ability of the turbine-generator to efficiently generate revenue-producing electricity. Also, United States Government regulatory requirements effectively limit the number of tubes that can be plugged. One prior art solution to the above recited problem is to preventatively sleeve the tubes in the region of the support plates during manufacture of the steam generator. However, this solution is expensive because it requires placing sleeves in tubes that may never experience stress corrosion cracking during operation of the steam generator. Hence, a problem in the art is to sleeve the inside surface of a steam generator tube, and more particularly, to sleeve the tube at a location beyond an existing sleeve previously disposed in the tube.

Therefore, an object of the present invention is to provide a device and method for sleeving an inside surface of a tubular member, which tubular member may be a heat transfer tube of the kind typically found in nuclear steam generators and which tubular member may contain an obstruction therein in the form of a previously installed sleeve.

### SUMMARY OF THE INVENTION

With the above object in view, the invention in its broad form is a device for sleeving an inside surface of a tubular member, comprising a sleeve adapted to be positioned along the inside surface of the tubular member, said sleeve having a wall forming a spiral-shaped transverse cross section defining a first position of said sleeve, the wall being expandable from the first position to form an annular transverse cross section defining a second position of said sleeve.

With the above object in view, the invention in its broad form is also a method for sleeving an inside surface of a tubular member, comprising the steps of positioning a sleeve along the inside surface of the tubular member, the sleeve having a wall forming a spiral-shaped transverse cross section defining a first position of the sleeve, the wall being expandable from the first position to form an annular transverse cross section defining a second position of the sleeve; and expanding the wall of the sleeve from the first position to the second position, so that the wall of the sleeve intimately engages the inside surface of the tubular member to sleeve the inside surface.

A feature of the present invention is the provision of a sleeve having a wall forming a compact spiral-shaped transverse cross section defining a first position thereof, the first position of the wall having an outside diameter smaller than the inside diameter of the previously installed sleeve in order to pass through the inside diameter of the previously installed sleeve, the wall being expandable from the first position to a second position wherein the second position of the wall forms an annular transverse cross section so as to intimately engage the inside diameter of the tube to sleeve the tube after passing through the inside diameter of the previously installed sleeve.

Another feature of the present invention is the provision of an expandable bladder engaging the wall of the sleeve for expanding the sleeve from the first position to the second position.

An advantage of the present invention is that the sleeve in its first position easily passes through the inside diameter of the previously installed sleeve in order to sleeve the tube at an axial position thereof beyond the previously installed sleeve.

Another advantage of the present invention is that manufacturing costs of the steam generator are reduced because the tubes of the steam generator need not be preventatively sleeved during manufacture of the- steam generator in order to locate sleeves at axial positions beyond the previously installed sleeve.

These and other features and advantages of the present invention will become apparent to those skilled in the art upon a reading of the following detailed description when taken in conjunction with the drawings wherein there is shown and described illustrative embodiments of the invention.

### BRIEF DESCRIPTION OF THE DRAWINGS

Figure 1 is a perspective view in partial vertical section of a typical nuclear steam generator with parts removed for clarity, the steam generator including U-shaped heat transfer tubes, support plates and a tubesheet disposed therein;
Figure 1A shows in vertical section, one of the tubes having a previously installed sleeve disposed therein at the elevation of the tubesheet;
Figure 2 shows the invention in operative condition to sleeve the tube at an elevation beyond the previously installed sleeve;
Figure 3 shows in elevation, expansion means and a sleeve connected thereto disposed at the elevation of one of the support plates, both the expansion means and the sleeve belonging to the invention for sleeving the tube at the location of the support plate;
Figure 4 shows in vertical section the expansion means and the sleeve of the invention;
Figure 5 is a perspective view in partial horizontal section of the expansion means and the sleeve of the invention disposed in the tube to sleeve the tube;
Figure 6 is a view along section line 6-6 of Figure 4;
Figure 7 is a view in horizontal section of the expansion means expanding the sleeve of the invention into engagement with the inside surface of the tube to sleeve the tube;
Figure 8 is a perspective view of the sleeve of the invention disposed in the tube and welded thereto for affixing the sleeve in the tube; and
Figure 9 shows in vertical section the sleeve of the invention disposed in the tube at a location or elevation beyond the previously installed sleeve.

### DESCRIPTION OF THE PREFERRED EMBODIMENT(S)

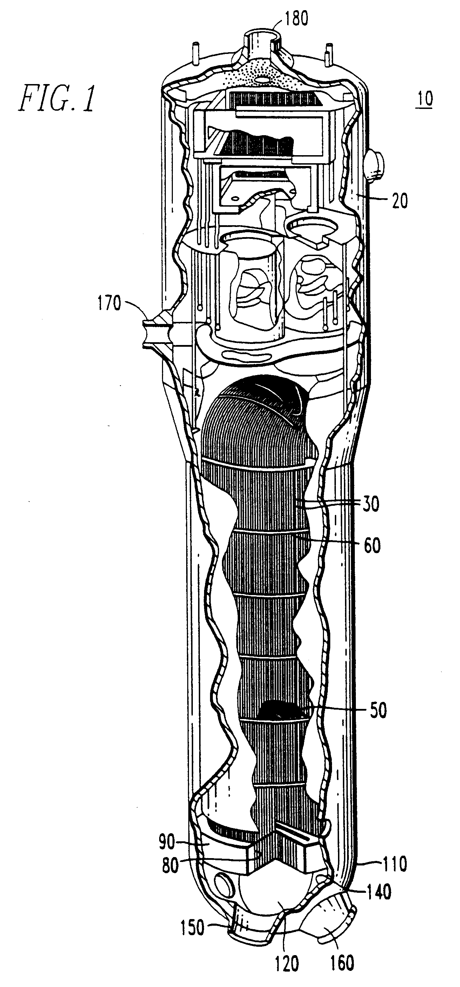

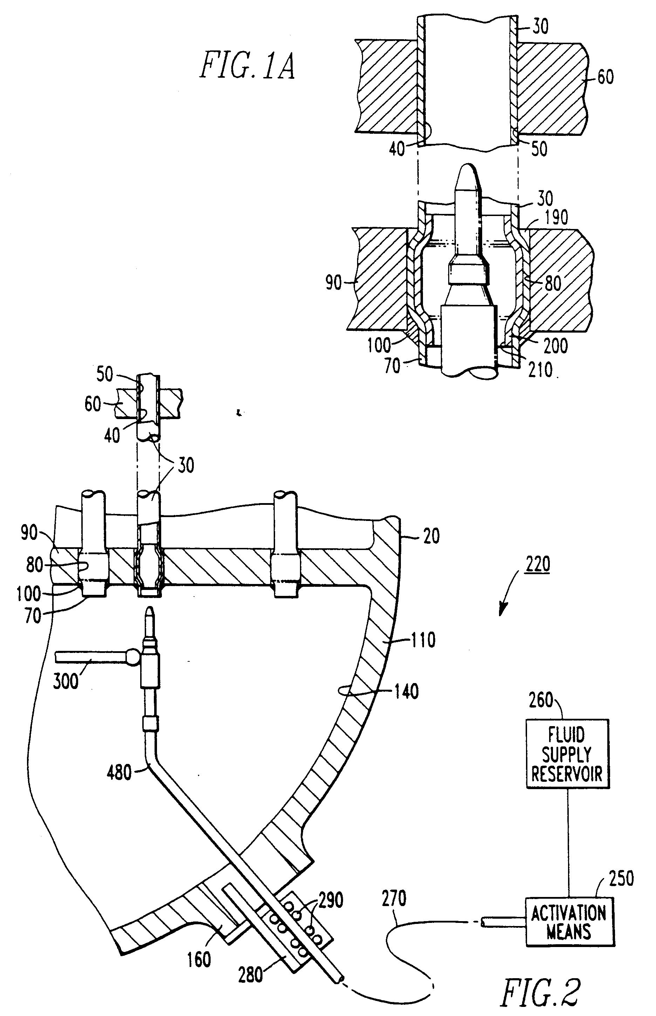

Referring to Fig. 1, there is shown a typical nuclear steam generator, generally referred to as 10, for generating steam. Steam generator 10 comprises a vertically oriented shell 20 having a plurality of inverted U-shaped steam generator tubes 30 disposed therein, each tube 30 having an inside surface 40. Tubes 30 may be "INCONEL 690", or the like, comprising by weight percent approximately 76.0% nickel, 0.08% carbon, 0.05% manganese, 8.3% iron, 0.008% sulfur, 0.025% copper, and 15.5% chromium for resisting stress corrosion cracking, which "INCONEL 690" material is available from the International Nickel Company, Incorporated located in Upland, California. Tubes 30 pass through respective ones of a plurality of holes 50 formed through each of a plurality of spaced-apart and horizontally-oriented support plates 60 for laterally supporting tubes 30. Ends 70 of each tube 30 pass through respective openings 80 formed through a horizontally-oriented tubesheet 90 which is disposed inwardly of shell 20. The ends 70 of each tube 30 are welded, such as by weldments 100, to tubesheet 90 to axially support each tube 30. Tubesheet 90 may be "INCONEL 690", or the like, for resisting stress corrosion cracking. Moreover, each tube end 70 is in fluid communication with a plenum 110 defined by steam generator 10. Plenum 110 is divided by means of a vertically oriented divider plate 120 into an inlet chamber 130 and an outlet chamber 140, for reasons disclosed presently. Inlet chamber 130 and outlet chamber 140 are in fluid communication with a pressurized and radioactive primary fluid (not shown) by means of an inlet nozzle 150 and an outlet nozzle 160, respectively, for circulating the primary fluid through tubes 30. The primary fluid itself is in fluid communication with a nuclear heat source (not shown) for heating the primary fluid. Nonradioactive secondary fluid (not shown) having a temperature lower than the primary fluid enters shell 20 through a feedwater nozzle 170 connected to shell 20. The secondary fluid is caused to flow through feedwater nozzle 170 and into shell 20 to eventually surround tubes 30. As the heated primary fluid circulates through tubes 30, it gives up its heat to the secondary fluid surrounding tubes 30 so that the secondary fluid is vaporized into steam as the heat of the primary fluid is conducted to the secondary fluid through the walls of tubes 30. This steam exits shell 20 through a steam nozzle 180 connected to shell 20 and flows to a turbine-generator (not shown) for providing revenue-producing electricity in a manner well known in the art of power generation. Such a typical nuclear steam generator is more fully disclosed in commonly owned U.S. Patent 4,079,701 titled "Steam Generator Sludge Removal System" issued March 21, 1978 in the name of Robert A. Hickman, et al., the disclosure of which is hereby incorporated by reference.

Referring to Fig. 1A, an annular gap 190 may surround a portion of tube 30 at the location of tubesheet 90. Such an annular gap may provide a site for the accumulation of corrosive particles (not shown), commonly referred to in the art as "sludge", which accumulation of sludge may corrosively attack tube 30 to degrade tube 30. Such degradation of tube 30, commonly referred to as stress corrosion cracking, in turn may lead to through-wall leaking of the radioactive primary fluid flowing through tube 30. Such leaking may thereby cause the radioactive contamination of the nonradioactive secondary fluid surrounding tube 30. Therefore, in order to prevent the radioactive contamination of the secondary fluid, tube 30 may have previously installed therein a prior art sleeve 200, which has been radially expanded to intimately engage the inside surface of tube 30, generally at the location of tubesheet 90 to prevent leaking of the primary fluid into the secondary fluid should stress corrosion cracking occur at this location. Moreover, such degradation may also occur in tube 30 at the locations of support plates 60. However, in the case of sleeving tube 30 at an axial location higher or beyond the location of the previously installed sleeve 200, by means of a sleeve identical to sleeve 200, may not be possible. This is so because, although sleeve 200 has an inside diameter 210 for allowing the primary fluid to pass therethrough, inside diameter 210 will obstruct the passage of a second similarly sized sleeve. That is, the previously installed sleeve 200 may obstruct or impede the movement of a similarly-sized sleeve on its way to the elevation of support plate 37. Therefore, a problem in the art is to suitably sleeve tube 30 at an elevation beyond sleeve 200 such that sleeve 200 will not create interference.

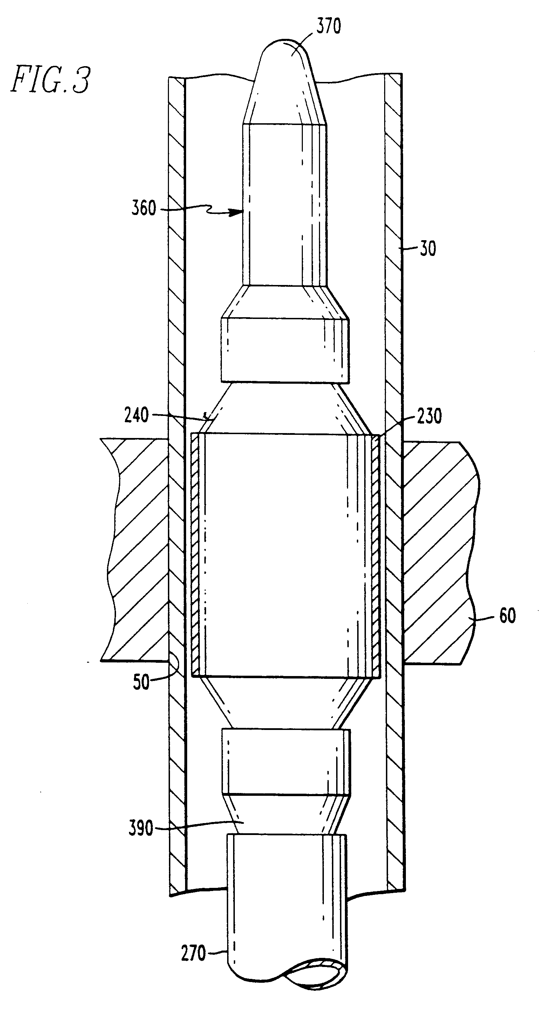

Therefore, turning now to Figs. 1A, 2 and 3, there is shown the subject matter of the present invention, which is a device, generally referred to as 220, for sleeving a predetermined portion of an inside surface of a tubular member, such as inside surface 40 of tube 30, which tube 30 may have sleeve 200 previously installed therein. Device 220 comprises a generally cylindrical and expandable sleeve 230 adapted to be positioned adjacent the predetermined portion (e.g., at the elevation of any of support plates 60) of inside surface 40 to be sleeved. Removably connected to sleeve 230 is expansion means, such as a resilient radially expandable bladder 240, for radially expanding sleeve 230, as described more fully hereinbelow. Connected to bladder 240 is activation means, such as a pressurizer 250, for outwardly moving or radially expanding bladder 240 under pressure, such that as bladder 240 expands, sleeve 230 will expand to intimately engage inside surface 40 of tube 30 to sleeve tube 30. Device 220 may also comprise a fluid supply reservoir 260 in fluid communication with pressurizer 250 for supplying a fluid to pressurizer 250, so that pressurizer 250 is capable of supplying pressurized fluid to bladder 240 for pressurizing bladder 240. Device 220 may further comprise a flexible conduit 270 interconnecting pressurizer 250 and bladder 240 for supplying the pressurized fluid from pressurizer 250 to bladder 240, as described more fully hereinbelow. In addition, device 220 may further comprise a conduit driver 280 having a plurality of rotatable wheels 290 engaging conduit 270 for driving conduit 270, so that bladder 240 and sleeve 230 travel along inside surface 40 of tube 30, as disclosed in more detail hereinbelow. Driver 280 and conduit 270 may be of the type such as is disclosed in commonly-owned U.S. Patent No. 4,901,578 titled "Probe Carrier Drive Assembly" issued February 20, 1990 in the name of Bernard A. Brill, III, the disclosure of which is hereby incorporated by reference. Moreover, device 220 may also comprise an alignment mechanism 300 capable of aligning bladder 240 and sleeve 230 with and inserting bladder 240 and sleeve 230 into tube 30. Such a suitable alignment device may be a Remotely Operated Service Arm (ROSA) available from the Westinghouse Electric Corporation, located in Pittsburgh, Pennsylvania.

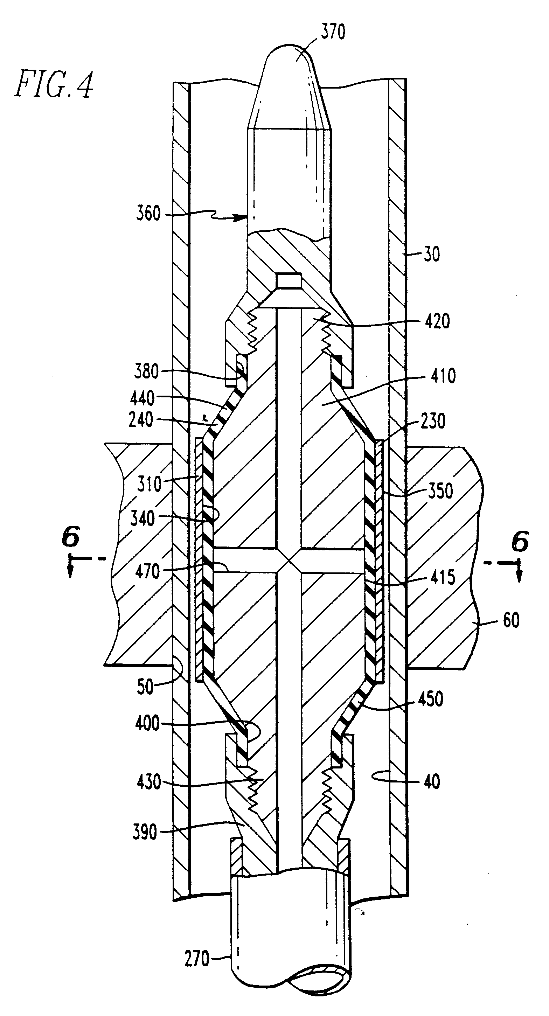

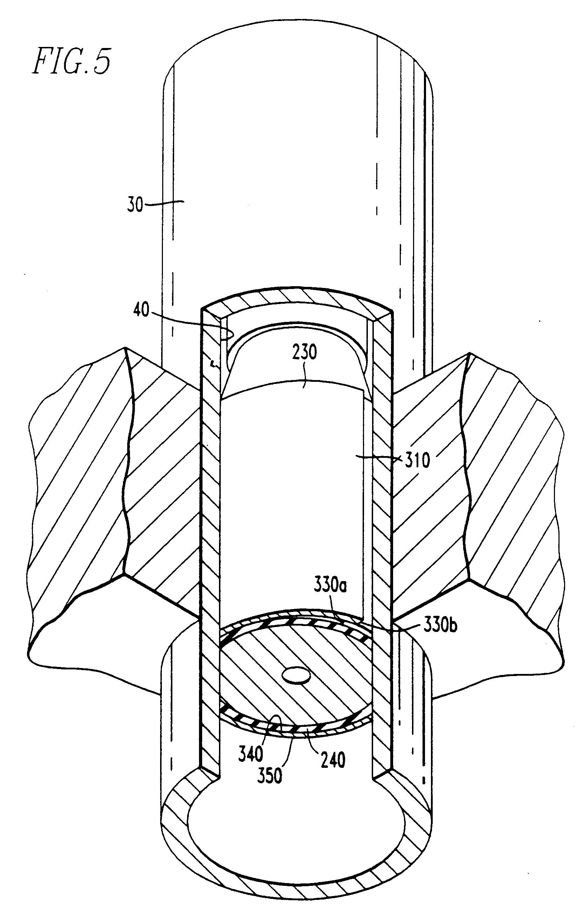

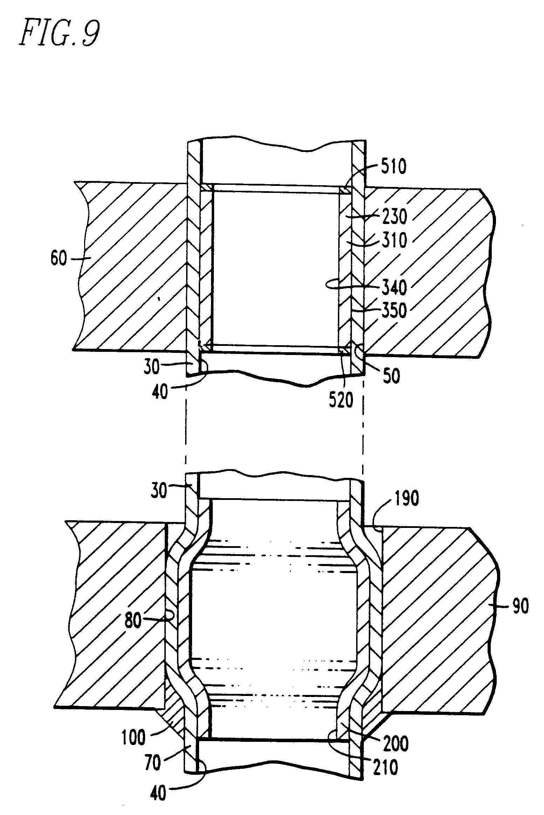

Referring to Figs. 4, 5, 6, 7, 8 and 9, sleeve 230, which may be "INCONEL 690", or the like, for resisting stress corrosion cracking, has a generally furled wall 310. Wall 310 has a longitudinal cut or "split" 320 therethrough forming exposed edges 330a and 330b for reasons disclosed hereinbelow. This split configuration of wall 310 allows it to form a compact generally furled, coiled, or spiral-shaped transverse cross section defining a first position of sleeve 230, the spiral-shaped transverse cross section being generally centered about the longitudinal axis of sleeve 230. In this first position of sleeve 230, exposed edges 330a and 330b overlap. Moreover, wall 310 has an inside surface 340 and an outside surface 350. As described in more detail hereinbelow, wall 310 of sleeve 230 is outwardly movable or expandable from the first position to a second position, wherein the second position of wall 310 forms a generally annular transverse cross section to allow wall 310 to intimately engage inside surface 40 of tube 30 for sleeving tube 30. In this manner, wall 310 of sleeve 230 will sleeve tube 30 as wall 310 expands from the first position to the second position thereof.

Referring again to Figs. 4, 5, 6, 7, 8 and 9, the previously mentioned expandable bladder 240 is sized to be insertable into sleeve 230. As described in more detail hereinbelow, bladder 240 is capable of intimately engaging inside surface 340 of sleeve 230 in order to expand sleeve 230 from its first position to its second position. In this manner, outside surface 350 of wall 310 will intimately engage inside surface 40 of tube 30 as bladder 240 causes wall 310 to expand from its first position to its second position. For this purpose, bladder 240 may be formed from any suitably resilient thermo elastomer material, such as "PELLETHANE CPR-2103", available from the Upjohn Company, located in Torrance, California.

Referring yet again to Figs. 4, 5, 6, 7, 8 an 9, an elongate support body, generally referred to as 360, is connected to and sealingly surrounded by bladder 240 for supporting bladder 240, as more fully described presently. In this regard, support body 360 comprises a generally cone-shaped nose portion 370 at the distal end thereof for allowing support body 360 to be aligned with and easily slidably inserted into end 70 of tube 30. Nose portion 370 has an internally threaded step bore 380 therein for reasons disclosed hereinbelow. Support body 360 also comprises an end fitting 390 at the proximal end thereof for connecting support body 360 to conduit 270. End fitting 390 also has an internally threaded step bore 400 therein for reasons disclosed hereinbelow. It is understood from the description hereinabove, that the terminology "distal end" means that end further away from outlet nozzle 160 (or inlet nozzle 150) and the terminology "proximal end" means that end nearer outlet nozzle 160 (or inlet nozzle 150). Support body 360 further comprises a mid-portion 410 having an exterior surface 415 thereon, the mid-portion 410 being interposed between nose portion 370 and end fitting 390. Mid-portion 410 of support body 360 has a distal end portion 420 having external threads therearound for threadably engaging the internal threads of step bore 380 to threadably connect mid-portion 410 to nose portion 370. Mid-portion 410 of support body 360 also has a proximal end portion 430 having external threads therearound for threadably engaging the internal threads of step bore 400 to threadably connect mid-portion 410 to end fitting 390. Bladder 240 has a distal end portion 440 that is captured in step bore 380, such as by a press fit, when nose portion 370 is threadably connected to mid-portion 410. Moreover, bladder 240 has a proximal end portion 450 that is captured in step bore 400, such as by a press fit, when end fitting 390 is threadably connected to mid-portion 410. Extending through end fitting 390 and mid-portion 410 is a channel 460 terminating in a port 470 on exterior surface 415 for conducting a pressurized fluid (e.g., air, water, oil, or the like) to the inside surface of bladder 240 to pressurize bladder 240. In this manner, bladder 240 sealingly surrounds mid-portion 410 and covers port 470 so that bladder 240 can be suitably pressurized.

Still referring to Figs. 4, 5, 6, 7, 8 and 9, the previously mentioned flexible conduit 270 includes a first end 480 thereof connected to end fitting 390 and a second end 490 thereof connected to pressurizer 250 for supplying the fluid to channel 460. Moreover, fluid supply reservoir 260 is in fluid communication with pressurizer 250 for supplying the fluid to pressurizer 250, so that pressurizer 250 is capable of supplying pressurized fluid to conduit 270 and thus to bladder 240 in order to pressurize bladder 240. It is appreciated from the description hereinabove that bladder 240 radially expands to intimately engage inside surface 340 of wall 310 as pressurizer 250 pressurizes bladder 240. It is further appreciated from the description hereinabove that wall 310 of sleeve 230 outwardly expands from its first position to its second position as bladder 240 engages wall 310. Moreover, it is appreciated from the description hereinabove that tube 30 is sleeved by sleeve 230 as wall 310 expands from the first position to the second position in order to intimately engage inside surface 40 of tube 30.

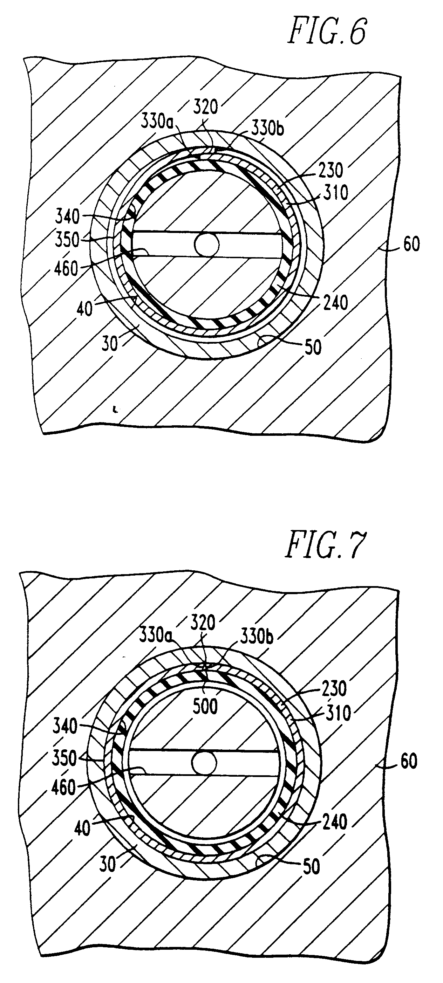

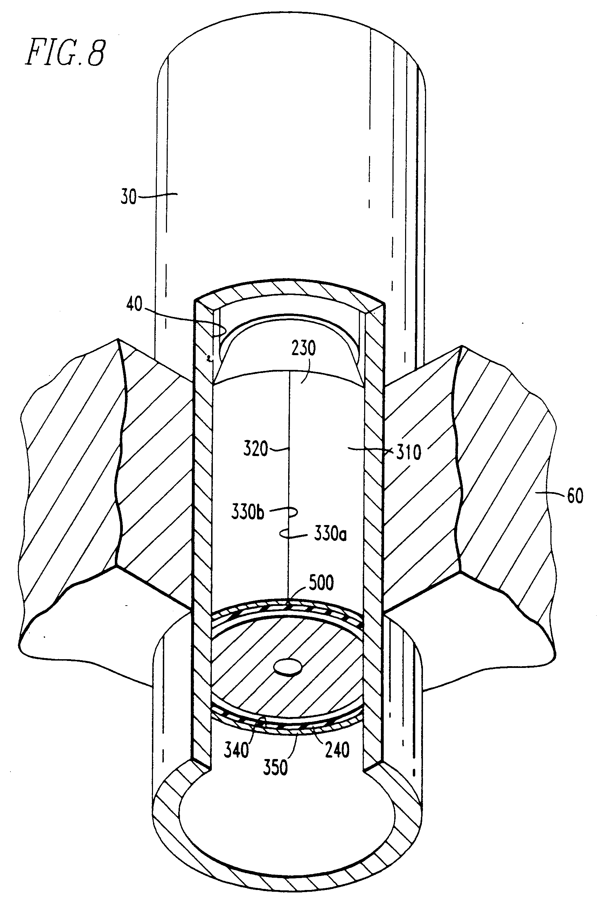

As best seen in Figs. 7 and 8, when wall 310 of sleeve 230 is moved or expanded to its second position, edges 330a/330b of wall 310 will substantially face and abut each other for forming the previously described generally annular transverse cross section. Edges 330a and 330b may be joined together, such as by a suitable longitudinal first weldment 500 for forming a welded joint therebetween. Moreover, the distal end portion of wall 310 may be joined to inside surface 40 of tube 30, such as by a second weldment 510 circumferentially extending around the distal end of wall 310 for securing the distal end portion of sleeve 230 to tube 30. In addition, the proximal end portion of wall 310 may be joined to inside surface 40 of tube 30, such as by a third weldment 520 circumferentially extending around the proximal end of wall 310 for securing the proximal end portion of sleeve 230 to tube 30. In this manner, sleeve 230 is affixed to tube 30 by weldments 510 and 520.

### OPERATION

Steam generator 10 is removed from service in a manner well known in the art and device 220 is positioned sufficiently near steam generator 10 for sleeving tube 30. A nondestructive examination device, such as an ultrasonic or eddy current sensor (not shown), is suitably moved in tube 30 to locate the degraded portion (not shown) of tube 30 to be sleeved. This degraded portion of tube 30 may, for example, be at an elevation of any one of the support plates 60. After the degraded portion of tube 30 is located, the nondestructive examination device is removed from tube 30.

Sleeve 230 is caused to surround bladder 240 and pressurizer 250 is suitably operated to pre-pressurize bladder 240 so that bladder 240 radially expands to engage inside surface 340 of wall 310 in order to removably secure sleeve 230 to bladder 240 by force of friction without expanding sleeve 230. This pressurization of bladder 240 may obtain a pressure of approximately 82.74 MPa. As pressurizer 250 is operated, fluid is withdrawn from fluid reservoir 260 by pressurizer 250, so that the fluid is supplied under pressure to bladder 240 to pre-pressurize bladder 240. When sleeve 230 surrounds bladder 240 during pre-pressurization, it is in its first position. Alignment mechanism 300 is disposed in outlet chamber 140 (or inlet chamber 150) and engages support body 360 for coaxially aligning support body 360 with tube 30. Conduit 270, which is connected to support body 260, is then engaged by wheels 290 of conduit driver 280 and wheels 290 are rotated by driver 280 for translating or driving support body 260 axially along inside surface 40 of tube 30.

However, tube 30 may already have sleeve 200 previously installed therein at the elevation of tubesheet 90. The inside diameter 210 of sleeve 200 presents a barrier, impediment or obstacle that will impede the passage therethrough of a second identically sized sleeve intended for sleeving tube 30 at an elevation beyond sleeve 200. This is so because any similarly sized sleeve will have an outside diameter greater that the smallest inside diameter of sleeve 200. Thus, sleeve 200 presents a barrier because it will prevent the installation of an identically sized sleeve at an elevation beyond sleeve 200.

To solve this problem, sleeve 230 is used to sleeve tube 30 beyond (i.e., higher than) the location of sleeve 200. Thus, use of sleeve 230 overcomes the barrier presented by sleeve 200. That is, wall 310 of sleeve 230 has the previously mentioned compact spiral-shaped transverse cross section defining the first position of sleeve 230 for easily passing sleeve 230 through inside diameter 210 of sleeve 200. In this configuration of sleeve 230, wall 310 thereof has an outside diameter at its widest point that is less than inside diameter 210 of sleeve 200 in order to travel unimpeded through inside diameter 210 on its way to the portion of tube 30 to be sleeved.

When sleeve 230 is positioned adjacent the portion of tube 30 to be sleeved, pressurizer 250 is again operated to pressurize and radially expand bladder 240, so that bladder 240 unfurls or expands wall 310 into intimate engagement with inside surface 40 of tube 30. For this purpose bladder 240 may be pressurized to approximately 12.41 to 17.24 MPa. In order to pressurize bladder 240, pressurizer 250 is operated so that it withdraws fluid from fluid reservoir 260 and supplies the fluid under pressure to conduitr 270, channel 460 and bladder 240. As pressurizer 250 withdraws fluid from fluid reservoir 260, it expands wall 240 causing wall 310 to intimately engage inside surface 40 of tube 30 such that sleeve 230 is secured to tube 30. As wall 310 expands, edges 330a/330b thereof will be brought into opposition.

Pressurizer 250 is then operated to depressurize bladder 240, so that bladder 240 disengages wall 310. In this regard, as pressurizer 250 depressurizes bladder 240, the fluid will be removed from bladder 240, channel 460 and conduit 270 to be returned to fluid reservoir 260. After bladder 240 disengages sleeve 230, support body 360 is removed from tube 30 and steam generator 10 in substantially the reverse order of its insertion into tube 30 and steam generator 10. Moreover, after support body 360 is removed from steam generator 10, alignment mechanism is also removed from steam generator 10.

As bladder 240 disengages wall 310 of sleeve 230, sleeve 230 will remain affixed to inside surface 40 because tube 40 will exert an inwardly directed "hoop stress" tending to maintain edges 330a/330b in close abutment or intimate engagement. The "hoop stress", which may be approximately 34.47 MPa, will maintain edges 330a/330b in close abutment such that sleeve 230 remains in tube by force of friction. In this regard, as wall 310 expands to engage inside surface 40 of tube 30, the wall of tube 30 elastically radially expands a like extent (e.g., 0.076 mm). However, when bladder 240 is depressurized, the wall of tube 30 will radially elastically contract because the initial expansion of tube 30 is elastic. As tube 30 elastically contracts, it will exert an inwardly directed "hoop stress" or gripping force on sleeve 230 for maintaining edges 330a/330b in abutting intimate engagement.

However, a suitable welding device (not shown), which may be a laser welding device, may be used to weld edges 330a/330b together to ensure that sleeve 230 remains in its annular configuration and does not return to its spiral-shaped configuration. Also, the distal and proximal end portions of sleeve 230 may be welded to tube 30 by use of the welding device to ensure that sleeve 230 remains affixed to tube 30.

Following sleeving of tube 30 in the manner disclosed hereinabove, steam generator 10 is returned to service so that it may resume generating steam without risk of commingling the radioactive primary fluid with the non-radioactive secondary fluid even though the wall of tube 30 is degraded.

It will be appreciated from the description hereinabove that the invention obtains several advantages. For example, an advantage of the present invention is that sleeve 230 in its first position easily passes through inside diameter 210 of previously installed sleeve 200 in order to sleeve tube 30 at an axial position thereof higher or beyond sleeve 200. Another advantage of the present invention is that manufacturing costs of steam generator 10 are reduced because all tubes 30 of steam generator 10 need not be preventatively sleeved during manufacture of steam generator 10 at elevations higher or beyond sleeve 200. Therefore, only those tubes 30 actually indicating degradation during operation of steam generator 10 need be sleeved.

Although the invention is fully illustrated and described herein, it is not intended that the invention as illustrated and described be limited to the details shown, because various modifications may be obtained with respect to the invention without departing from the spirit of the invention or the scope of equivalents thereof. For example, sleeve 200 need not be present. That is, sleeve 230 is usable whenever it is desirable to sleeve a tubular member by means of a sleeve that is expandable from a compact smaller first position to an expanded larger second position. Moreover, tube 30 need not be a nuclear steam generator tube; rather, tube 30 may be any similar tubular member requiring sleeving.

Therefore, what is provided is a device and method for sleeving the inside surface of a tubular member, which tubular member may be a heat transfer tube of the kind typically found in nuclear steam generators.

## Claims

1. A device for sleeving an inside surface (40) of a tube (30), characterized by a sleeve (230) adapted to intimately engage the inside surface of the tube, said sleeve having a wall (310) forming a spiral-shaped transverse cross section defining a first position of said sleeve, the wall being outwardly expandable to form an annular transverse cross section defining a second position of said sleeve.

2. The device of claim 1, further characterized by a radially expandable bladder (240) engaging the wall of said sleeve for expanding said sleeve from the first position to the second position.

3. The device of claim 2, further characterized by a pressurizer (250) in fluid communication with said bladder for pressurizing said bladder, whereby said bladder radially expands to engage the wall of said sleeve as said pressurizer pressurizes said bladder, and whereby said sleeve expands from the first position to the second position as said bladder engages the wall of said sleeve, so that the wall of said sleeve engages the inside surface of the tube for sleeving the inside surface of the tube as said sleeve expands from the first position to the second position.

4. The device of claim 3, further characterized by a fluid reservoir (260) in fluid communication with said pressurizer for supplying a fluid to said pressurizer, so that said pressurizer pressurizes the fluid for pressurizing said bladder.

5. The device of claim 4, further characterized by an elongate support body (360) having an exterior portion thereof connected to and surrounded by said bladder for supporting said bladder, said support body having a channel therethrough terminating in a port on the exterior surface, the port in communication with said bladder for supplying a fluid to said bladder to pressurize said bladder.

6. The device of claim 5, further characterized by a flexible conduit (270) having a first end connected to said support body and in fluid communication with the channel for supplying the fluid to the channel and having a second end connected to said pressurizer for pressurizing the fluid and for supplying the pressurized fluid to said conduit so that the fluid flows through said conduit, through the channel, through the port and to said bladder to pressurize said bladder for radially expanding said bladder, whereby said bladder radially expands to intimately engage the wall of said sleeve as said pressurizer pressurizes said bladder and whereby said sleeve expands from the first position to the second position as said bladder intimately engages the wall of said sleeve, so that the wall of said sleeve intimately engages the inside surface of the tube for sleeving the inside surface of the tube as said sleeve expands from the first position to the second position and intimately engages the inside surface of the tube.

7. The device of claim 6, further comprising a conduit driver (280) engaging said conduit for driving said conduit, said support body, said bladder and said sleeve axially along the inside surface of the tube.

8. A method for sleeving an inside surface (40) of a tube (30), characterized by the steps of:
(a) positioning a sleeve (230) adjacent the inside surface of the tube, the sleeve surrounding a radially expandable bladder (240) connected to and surrounding an elongate support body (360) having an exterior surface thereon and defining a channel (460) therethrough terminating in a port (470) on the exterior surface, the port in communication with the bladder for supplying a fluid to the bladder, the sleeve having a wall (310) having a longitudinal split therethrough for forming a spiral-shaped transverse cross section defining a first position of the sleeve, the wall being outwardly expandable to form an annular transverse cross section defining a second position of the sleeve; and
(b) pressurizing the bladder to radially expand the bladder so that the bladder intimately engages the wall of the sleeve to expand the sleeve from the first position to the second position for intimately engaging the inside surface of the tube to sleeve the inside surface of the tube.

9. The method of claim 8, wherein the step of pressurizing the bladder is characterized by the steps of:
(a) providing a flexible conduit (270) having a first end and a second end, the first end of the conduit (270) connected to the support body and in communication with the channel for conducting fluid to the channel, through the port and to the bladder;
(b) activating a pressurizer (250) connected to the second end of the conduit for pressurizing the fluid in the conduit so that the bladder is pressurized, whereby the bladder expands as the pressurizer pressurizes the bladder, and whereby the sleeve expands from the first position to the second position as the bladder expands; and
(c) supplying the fluid from a fluid reservoir (260) to the pressurizer so that the fluid supplied to the pressurizer is pressurized by the pressurizer.

10. The method of claim 9, wherein the step of positioning the sleeve further comprises the step of engaging the conduit with a conduit driver (280) for driving the conduit, the support body, the bladder and the sleeve axially along the inside surface of the tube.
